# EUROPÄISCHE PATENTSCHRIFT

(11) **EP 0 799 109 B1**
(45) Veröffentlichungstag und Bekanntmachung des Hinweises auf die Patenterteilung: **09.06.1999**
(21) Anmeldenummer: 95944013.2
(22) Anmeldetag: 16.12.1995
(51) Int. Cl.: B24B 1/00, B23Q 39/02

(54) **VERFAHREN ZUR ENDBEARBEITUNG GEHÄRTETER WERKSTÜCKE**
HARDENED WORKPIECE FINISHING PROCESS
PROCEDE DE FINISSAGE DE PIECES TREMPEES

(30) Priorität: 21.12.1994 DE 4445621
(43) Veröffentlichungstag der Anmeldung: 08.10.1997
(73) Patentinhaber: KOMET Präzisionswerkzeuge Robert Breuning GmbH, D-74354 Besigheim (DE)
(72) Erfinder: BACH, Günther, D-74354 Besigheim (DE); NAUMANN, Heinz, D-74354 Besigheim (DE)
(74) Vertreter: Wolf, Eckhard, Dr.-Ing.
(86) Internationale Anmeldenummer: EP9505017
(87) Internationale Veröffentlichungsnummer: WO9619317

(56) Entgegenhaltungen:
- EP-A- 0 512 956
- DE-A- 4 112 763
- FR-A- 736 496
- GB-A- 384 937
- US-A- 4 593 444

## Beschreibung

Die Erfindung betrifft ein Verfahren zur Endbearbeitung rotationssymmetrischer Werkstückoberflächen.

Werkstücke aus Stahl werden regelmäßig im ungehärteten Zustand durch Drehen, Bohren und/oder Fräsen vorbearbeitet und erst dann gehärtet. Um die beim Härten auftretenden Maßveränderungen und Verzüge kompensieren zu können, werden die Werkstücke bei der Vorbearbeitung mit einem Aufmaß versehen, das bei der anschließenden Endbearbeitung im gehärteten Zustand des Werkstücks durch Schleifen abgetragen wird. So wird beim Innenschleifen von Bohrungen das Schleifwerkzeug mit fliegend überstehender Schleifspindel in die Bohrung des um die Spindelachse drehenden Werkstücks eingefahren und im Inneren quer zur Drehachse des Schleifwerkzeugs gegen die zu bearbeitende Bohrungswand zugestellt. In dieser Stellung wird das Schleifwerkzeug axial oszillierend verschoben und in der dazu senkrechten Zustellrichtung auf Zustellmaß gebracht. Die Zustellung erfolgt dabei in Schritten bis zum Fertigmaß. Entsprechendes gilt auch für das Außenschleifen oder das Planschleifen von Werkstücken, wobei die Zustellbewegung immer senkrecht zur Oberfläche bis zum Fertigmaß erfolgt und die Qszillationsbewegung parallel dazu. Die Bewegungsabläufe werden üblicherweise numerisch gesteuert.

Schleifarbeitsgänge sind sehr zeitaufwendig und daher teuer. Dies gilt vor allem für das Innenschleifen bei relativ kleinen Bohrungsdurchmessern.

Es ist ein Verfahren der eingangs angegebenen Art bekannt (EP-A-512 956), bei welchem ein unter Belassung eines Aufmaßes vorbereitetes Werkstück an einer drehend angetriebenen Werkstückspindel einer Schleifmaschine eingespannt und unter Abtrag eines Teils des Aufmaßes mit einem zur Werkstückspindel und/oder zu der zu bearbeitenden rotationssymmetrischen Werkstückoberfläche variabel exzentrischen Werkzeugachse rotierenden, quer zur Werkstückoberfläche zustellbaren und parallel zu dieser verschiebbaren Schleifwerkzeug bearbeitet wird.

Ausgehend hiervon liegt der Erfindung die Aufgabe zugrunde, ein Verfahren der eingangs angegebenen Art zu entwickeln, womit eine erhebliche Zeiteinsparung bei der Endbearbeitung gehärteter Werkstücke erzielt werden kann.

Um dies zu erreichen, wird die im Anspruch 1 angegebene Merkmalskombination vorgeschlagen. Vorteilhafte Ausgestaltungen und Weiterbildungen der Erfindung ergeben sich aus den Unteransprüchen.

Die erfindungsgemäße Lösung geht von dem Gedanken aus, daß ein erheblicher Teil des Aufmaßes durch Hartdrehen in sehr viel kürzerer Zeit als durch Schleifen abgetragen werden kann und daß nur an Stellen mit entsprechend hohen Anforderungen an die Genauigkeit und Oberflächenhohen Anforderungen an die Genauigkeit und Oberflächengüte das Finish mit einem entsprechend kleinen Restabtrag durch Schleifen erfolgt.

Eine bevorzugte Ausgestaltung der Erfindung sieht vor, daß der Drehantrieb der Werkstückspindel während der Drehbearbeitung abgeschaltet wird. Wegen der relativ hohen zu bewegenden Masse und der geringen, auf das Werkstück übertragenen Schneidkräfte kann die Werkstückspindel während der Drehbearbeitung ungebremst bleiben und in Drehrichtung ohne Nachteil langsam mitgenommen werden. Zusätzlich ist es jedoch möglich, die Werkstückspindel während der Drehbearbeitung zu bremsen oder gegen Verdrehen mit einfachen Mitteln zu sperren. Umgekehrt ist es auch möglich, mit feststehendem Drehwerkzeug zu arbeiten und das Werkstück mit einem entsprechend ausgelegten Spindelantrieb in eine schnelle Drehbewegung zu versetzen. Je nach Anforderungen an die Genauigkeit und Oberflächengüte können bei Werkstücken aus gehärtetem Stahl 70 bis 90 % des Aufmaßes durch Hartdrehen und nur der verbleibende Rest 30 bis 10 % durch Schleifen abgetragen werden. Wenn man berücksichtigt, daß der Abtrag beim Hartdrehen etwa 10 mal so schnell wie beim Schleifen erfolgt, können unter Berücksichtigung weiterer Vorgänge, wie Einspannen und Messen, die Zykluszeiten bei der Endbearbeitung um mehr als die Hälfte reduziert werden.

Eine Weiterbildung des erfindungsgemäßen Verfahrens sieht vor, daß der Schneidradius des Drehwerkzeugs während des Drehvorgangs verstellt wird. Damit lassen sich beim Hartdrehen auch komplizierte Konturen in das Werkstück einbringen und beim anschließenden Schleifvorgang an den relevanten Stellen des Werkstücks eine hohe Genauigkeit und Oberflächengüte erzielen.

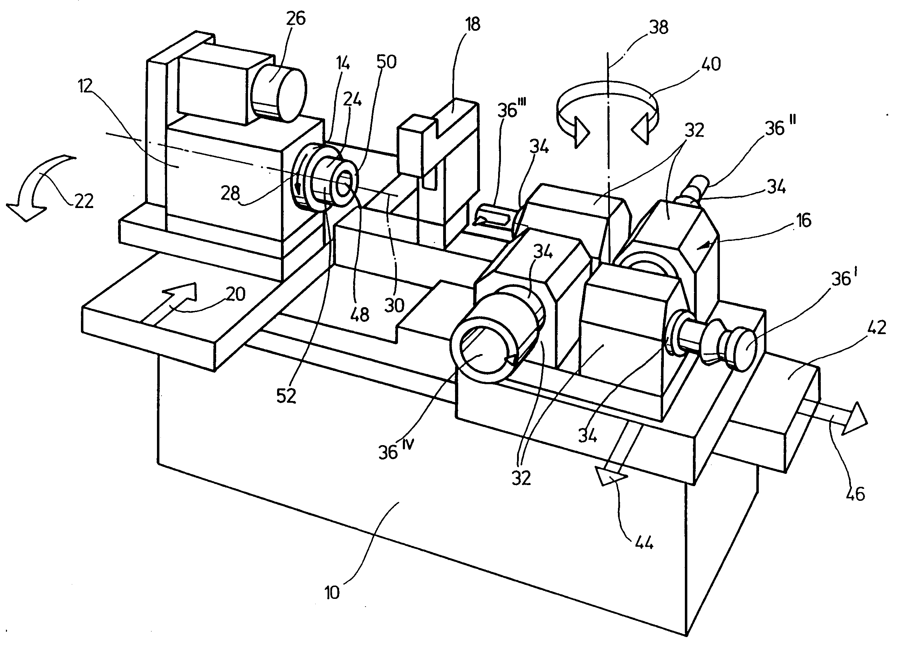

Im folgenden wird die Erfindung anhand eines in der Zeichnung in schematischer Weise dargestellten Ausführungsbeispiels näher erläutert. Die einzige Figur zeigt eine Schleifmaschine mit liegendem Mehrspindel-Revolverkopf für Schleif- und Drehwerkzeuge in schaubildlicher Darstellung.

Die in der Zeichnung dargestellte Schleifmaschine besteht im wesentlichen aus einem Maschinenbett 10, einem Spindelstock 12 mit Werkstückspindel 14, einem Mehrspindelrevolverkopf 16 mit vertikaler Schaltachse 38 und einer zwischen Spindelstock und Revolverkopf am Maschinenbett angeordneten Abrichteinrichtung 18.

Der Spindelstock 12 ist in Richtung des Pfeils 20 quer verschiebbar und um eine Vertikalachse in Richtung des Pfeils 22 verstellbar auf dem Maschinenbett angeordnet. Die Werkstückspindel 14 kann mit dem zu bearbeitenden Werkstück 24 bestückt werden und ist durch einen Antriebsmotor 26 in Richtung des Pfeils 28 um die horizontale Spindelachse 30 im Spindelstock 12 drehbar gelagert.

Der Revolverkopf 16 weist bei dem gezeigten Ausführungsbeispiel vier Spindeleinheiten 32 mit integriertem Antriebsaggregat und angetriebener Schleifspindel 34 zur Aufnahme je eines Werkzeugs 36', 36'', 36''', 36^{IV} auf. Bei den fliegend über die Schleifspindeln 34 überstehenden Werkzeugen handelt es sich im einzelnen um einen Planschleifdorn 36', einen Innenschleifdorn 36 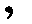 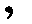 , eine Bohrstange 36''' zum Innenhartdrehen und eine Bohrstange 36^{IV} zum Außenhartdrehen. Die Auswahl der einzelnen Werkzeuge erfolgt durch Drehen des Revolverkopfs 16 um die Schaltachse 38 in Richtung des Pfeils 40. Der Revolverkopf 16 kann außerdem über einen Kreuzschlitten 42 in Richtung der Pfeile 44 und 46 quer und längs des Maschinenbetts 10 verschoben werden.

Bei dem Werkstück 24 handelt es sich um ein rotationssymmetrisches, vorbearbeitetes und gehärtetes Stahlteil mit einer zentralen Bohrung 48, einer Planfläche 50 und einer zylindrischen Mantelfläche 52. Bei der Endbearbeitung wird zunächst ein in der Wand der Bohrung 48 vorhandenes Aufmaß mit Hilfe des Innendrehwerkzeugs 36''' bis auf etwa 80 % des Fertigmaßes abgetragen. Sodann wird mit dem Außendrehwerkzeug 36^{IV} das Aufmaß im Bereich der Mantelfläche 52 bis auf etwa 80 % des Fertigmaßes abgetragen. Bei den genannten Drehvorgängen werden die betreffenden Werkzeuge 36''' und 36^{IV} mit ihren Spindeln 34 mit der Werstück-Spindelachse 30 über eine nicht dargestellte NC-Steuerung ausgefluchtet und der Antriebsmotor 26 der Werkstückspindel 14 angehalten. Beim anschließenden Finish wird zunächst durch Auswahl des Innenschleifdorns 36'' die Innenwand der Bohrung 48 auf Fertigmaß gebracht und sodann durch Auswahl des Planschleifdorns 36' die Planfläche 50 bearbeitet. Der Schleifkörper des Schleifdorns 36' und/oder 36'' wird vor einem Schleifvorgang mit Hilfe der Abrichteinrichtung 18 vermessen und unter Kompensation des zuvor aufgetretenen Verschleißes nachgestellt und/oder nachgearbeitet.

## Patentansprüche

1. Verfahren zur Endbearbeitung rotationssymmetrischer Werkstückoberflächen, bei welchem ein unter Belassung eines Aufmaßes vorbearbeitetes, gehärtetes Werkstück (24) an einer drehend angetriebenen Werkstückspindel (14) einer Schleifmaschine eingespannt und unter Abtrag eines Teils des Aufmaßes mit einem um eine zur Werkstückspindel und/oder zu der zu bearbeitenden rotationssymmetrischen Werkstückoberfläche variabel exzentrische Werkzeugachse rotierenden, quer zur Werkstückoberfläche zustellbaren und parallel zu dieser oszillierend verschiebbaren Schleifwerkzeug (36',36'') bearbeitet wird, und bei welchem vor dem Schleifvorgang an die Stelle des Schleifwerkzeugs (36',36'') ein als Bohrstange mit einer Schneide zum Innenhartdrehen oder zum Außenhartdrehen ausgebildetes Drehwerkzeug (36''',36^{IV}) in eine zur Werkstückspindel (14) und/oder zu der zu bearbeitenden rotationssymmetrischen Werkstückoberfläche koaxial fluchtende Position eingewechselt, um eine zur Werkstückspindelachse (30) fluchtende Achse gedreht und unter Ausführung einer einen Teil des Aufmaßes abtragenden Drehbearbeitung axial in Richtung Werkstück (24) zugestellt wird.

2. Verfahren nach Anspruch 1, **dadurch gekennzeichnet**, daß der Drehantrieb der Werkstückspindel (14) während der Drehbearbeitung abgeschaltet wird.

3. Verfahren nach Anspruch 2, **dadurch gekennzeichnet**, daß die Werkstückspindel (14) während der Drehbearbeitung ungebremst in Drehrichtung des Drehwerkzeugs (36''';36^{IV}) mitgenommen wird.

4. Verfahren nach Anspruch 2, **dadurch gekennzeichnet**, daß die Werkstückspindel (14) während der Drehbearbeitung gebremst oder in Drehrichtung gesperrt wird.

5. Verfahren nach einem der Ansprüche 1 bis 4**, dadurch gekennzeichnet**, daß das Schleifwerkzeug (36 , 36'') und das Drehwerkzeug (36''',36^{IV}) um eine gemeinsame, zur jeweiligen Werkzeugachse und zur Werkstückspindelachse (30) senkrechte Schaltachse (38) gedreht und dabei wahlweise in Richtung Werkstückspindel (14) ausgerichtet werden.

6. Verfahren nach einem der Ansprüche 1 bis 5, **dadurch gekennzeichnet**, daß der Schneidenradius des Drehwerkzeugs (36''',36^{IV}) während des Drehvorgangs verstellt wird.

7. Verfahren nach einem der Ansprüche 1 bis 6, **dadurch gekennzeichnet**, daß bei Werkstücken (24) aus gehärtetem Stahl 70 bis 90 % des Aufmaßes durch Hartdrehen und der Rest durch Schleifen abgetragen wird.

## Claims

1. A method for finishing rotationally symmetrical workpiece surfaces, wherein a hardened workpiece 24 which has been premachined leaving an overmeasure is clamped into a rotationally driven workpiece spindle (14) of a grinding machine and is machined using a grinding tool (36',36'') effecting the removal of part of the overmeasure, the grinding tool rotating about a tool axis which is variably eccentric with respect to the workpiece spindle and/or to the rotationally symmetrical workpiece surface to be machined, the grinding tool further being advancable perpendicularly to the workpiece surface and being oscillatingly displaceable parallel with respect to the workpiece surface, and wherein before the grinding process a lathe tool (36''',36^{IV}) is exchanged into a coaxially aligned position with respect to the workpiece spindle (14) and/or the rotationally symmetrical workpiece surface to be machined in place of the grinding tool (36',36''), the lathe tool being rotated about an axis which is aligned with respect to the axis (30) of the workpiece spindle and being advanced axially in the direction of the workpiece (24) while effecting a machining which removes part of the overmeasure.

2. The method of claim 1, characterized in that the rotational drive of the workpiece spindle (14) is switched off during the rotational machining.

3. The method of claim 2, characterized in that the workpiece spindle (14) is carried along in the direction of rotation of the lathe tool (36''',36^{IV}) without braking during the rotational machining.

4. The method of claim 2, characterized in that the workpiece spindle (14) is braked or locked in the direction of rotation during the rotational machining.

5. The method of one of claims 1 to 4, characterized in that the grinding tool (36',36'') and the lathe tool (36''',36^{IV}) are rotated about a common shift axis (38) which is perpendicular to the momentary tool axis and to the axis (30) of the workpiece spindle, and that they are alternatively aligned in the direction of the workpiece spindle (14).

6. The method of one of claims 1 to 5, characterized in that the cutting edge radius of the lathe tool (36''',36^{IV}) is adjusted during the rotational machining.

7. The method of one of claims 1 to 6, characterized in that when machining workpieces (24) made of hardened steel, 70% to 90% of the overmeasure is removed by means of hard turning and the rest by means of grinding.

## Revendications

1. Procédé d'usinage de finition de pièces à symétrie de révolution, selon lequel une pièce (24), préusinée en laissant une surcote et trempée, est serrée sur une broche porte-pièce (14) entraînée en rotation d'une meuleuse et, en enlevant une partie de la surcote, usinée par un outil de meulage (36', 36'') qui tourne autour d'un axe d'outil à excentricité variable par rapport à la broche porte-pièce et/ou à la surface de la pièce à symétrie de révolution à usiner et qui peut être approché transversalement à la surface de la pièce et déplacé de façon oscillante parallèlement à cette surface, et procédé selon lequel, avant l'opération de meulage, on remplace l'outil de meulage (36', 36''), dans une position coaxialement alignée par rapport à la broche porte-pièce (14) et/ou à la surface de la pièce à symétrie de révolution à usiner, par un outil de tournage (36''', 36^{IV}) réalisé sous forme de barre d'alésage avec un tranchant pour le tournage intérieur ou pour le tournage extérieur, et cet outil est mis en rotation autour d'un axe aligné avec l'axe (30) de la broche porte-pièce, et approché axialement en direction de la pièce (24) en accomplissant un tournage enlevant une partie de la surcote.

2. Procédé selon la revendication 1, **caractérisé** en ce que l'entraînement en rotation de la broche porte-pièce (14) est arrêté pendant le tournage.

3. Procédé selon la revendication 2, **caractérisé** en ce que la broche porte-pièce (14) est, pendant le tournage, conjointement entraînée sans fraisage dans la direction de rotation de l'outil de tournage (36''', 36^{IV}).

4. Procédé selon la revendication 2, **caractérisé** en ce que la broche porte-pièce (14) est, pendant le tournage, freinée ou bloquée dans la direction de rotation.

5. Procédé selon l'une des revendications 1 à 4, **caractérisé** en ce que on fait tourner l'outil de meulage (36', 36'') et l'outil de tournage (36''', 36^{IV}) autour d'un axe commun (38) de changement d'outil, perpendiculaire à l'axe de l'outil respectif et à l'axe (30) de la broche porte-pièce, et on les oriente alors sélectivement en direction de la broche porte-pièce (14).

6. Procédé selon l'une des revendications 1 à 5, **caractérisé** en ce que le rayon de coupe de l'outil de tournage (36''', 36^{IV}) est réglé pendant l'opération de tournage.

7. Procédé selon l'une des revendications 1 à 6, caractérisé en ce que, pour des pièces (24) en acier trempé, 70 à 90 % de la surcote est enlevée par tournage à l'état trempé, et le reste par meulage.
